(19)

Europäisches
Patentamt
European
Patent Office
Office européen
des brevets

(11) **EP 4 474 832 A1**

(12) **EUROPEAN PATENT APPLICATION**

(43) Date of publication:
**11.12.2024 Bulletin 2024/50**

(21) Application number: **24176582.5**

(22) Date of filing: **17.05.2024**

(51) International Patent Classification (IPC):
**G01P 21/02** (2006.01)    **G01D 18/00** (2006.01)
**G01P 3/36** (2006.01)

(52) Cooperative Patent Classification (CPC):
**G01P 21/02;** G01B 11/14; G01D 2218/10;
G01M 13/00; G01M 17/00; G01P 3/36

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.05.2023 EP 23174144**

(71) Applicants:
• **Miele, Gianfranco**
 **03049 Sant'Elia Fiumerapido (FR) (IT)**
• **Laracca, Marco**
 **04023 Formia (LT) (IT)**

• **Iannitti, Gianluca**
 **03048 Sant'Apollinare (FR) (IT)**

(72) Inventors:
• **Miele, Gianfranco**
 **03049 Sant'Elia Fiumerapido (FR) (IT)**
• **Laracca, Marco**
 **04023 Formia (LT) (IT)**
• **Iannitti, Gianluca**
 **03048 Sant'Apollinare (FR) (IT)**

(74) Representative: **Studio Torta S.p.A.**
 **Via Viotti, 9**
 **10121 Torino (IT)**

(54) **TEST-BED SYSTEM FOR VERIFICATION AND CALIBRATION OF LINEAR OR ANGULAR DISPLACEMENT AND SPEED SENSORS**

(57)    A test-bed system (10) is provided with: a housing (12); a flexible transmission element (16) arranged within the housing (12); a driving arrangement (18,19,22) arranged within the housing (12), coupled to the flexible transmission element (16) to drive the flexible element (16) into a movement at different reference speeds, designed for verification or calibration of a linear or angular displacement or speed sensor (1) operatively coupled to the flexible transmission element (16).

FIG. 2A

EP 4 474 832 A1

**Description**

CROSS-REFERENCE TO RELATED APPLICATIONS

This patent application claims priority from European patent application no. 23174144.8 filed on May 18, 2023, the entire disclosure of which is incorporated herein by reference.

TECHNICAL FIELD

The present solution relates to a test-bed system for verification and calibration of linear or angular displacement and speed sensors.

BACKGROUND

As it is known, linear or angular displacement and speed sensors are commonly used in a plurality of applications.

For example, speed sensors (speedometers or speed-meters), are widely used for many kinds of applications, ranging from vehicle driving dynamics tests to vehicle speed measurements.

In more detail, vehicle speedometers are measurement instruments for measuring the speed of a target vehicle. They are used for different ranges of applications such as road vehicle speed enforcement, vehicle driving dynamic tests, tire performance tests, to cite a few.

In order to warrant the traceability of the measurement results obtained in all these applications to the International System of Units, the sensors must be calibrated according to the rules of the ISO/IEC 17025 standard and comply with the ILAC (International Laboratory Accreditation Cooperation) policy on the traceability of measurement results.

Many are the measurement principles adopted by these instruments and many are the calibration techniques that can be adopted.

For example, in case of vehicle speed sensors, a calibration technique that can be utilized, independently of the measurement principle adopted by the measurement instrument, is the calibration on speed tracks.

In this case, the measurement instrument under calibration (UUC - Unit Under Calibration) measures the speed of a target vehicle on which the same device is mounted, and the values obtained are compared with the measurement results provided by a reference measurement instrument or system.

An example of an on-track calibration procedure is reported in A. Martucci, G. Cerasuolo, O. Petrella, and M. Laracca, "On the Calibration of GNSS-Based Vehicle Speed Meters," Sensors, vol. 20, no. 3, 2020.

Even if this approach is valid and accurate, it has some drawbacks. The main drawback regards the safety of all the people (driver and technicians) involved in the calibration tests. Tests must be carefully designed and planned in order to warrant the safety of the drivers and the technical operators, especially if very high-speed calibration points are required. Furthermore, safety also has a non-negligible economic impact on a procedure that is not cheap, particularly if it must use sports cars and speed tracks needed to perform calibrations at very high speeds.

In general, in order to avoid the above discussed issues, the scientific community is trying to propose verification and calibration methods to be carried out in a laboratory. These methods should also be suitably customized according to the measurement principle adopted by the UUC.

An exemplary solution is disclosed in L. Du, Q. Sun, J. Bai, and J. Wang, "A verification method for traffic radar-based speed meter with target position determination in road vehicle speeding enforcement," IEEE Transactions on Vehicular Technology, vol. 70, no. 12, pp. 12 374-12 388, 2021.

In this document, the authors propose a verification method that includes a simulated speed calibration method for initial verification in the laboratory for traffic radar-based speed meters. This method simulates Doppler shift signals according to the imposed speed values and transmits them to the UUC through its antenna.

J. Jendzurski and N. Paulter, "Calibration of Speed Enforcement Downthe-Road Radars," Journal of Research of the National Institute of Standards and Technology, vol. 114, no. 3, pp. 137-148, May 2009, discloses a different method for the calibration of radar-based speed meters. This method adopts tuning forks that are able to provide an acoustic resonant frequency that gives a specific speed indication for a given radar carrier frequency.

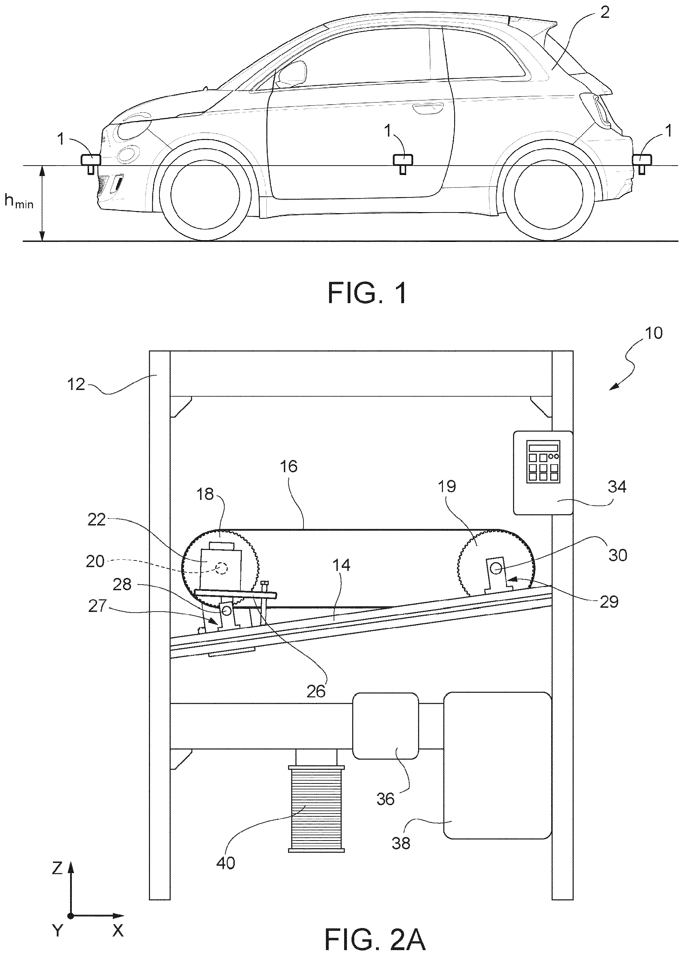

Figure 1 shows schematically exemplary speed and displacement sensors, denoted with 1, in particular non-contact optical-based sensors, which may generally be installed on a target vehicle 2 in one of the three shown positions (at the front, middle or rear of the vehicle 2), at a minimum height above the road surface ($h_{min}$) and pointing towards the road surface. After the installation, when the vehicle 2 starts to move, sensors 1 are able to measure the linear velocity and displacement along the vehicle's moving direction.

These sensors 1 are able to measure the speed of the target vehicle 2 on which they are mounted with a measurement range from 0.1 km/h to 250 km/h and up to 400 km/h in selected models; these sensors are also designed for application under extreme testing conditions, having good performance even on snow and ice as well as on wet surfaces.

Thanks to these features, these optical-based sensors are successfully adopted in many testing applications, such as vehicle driving dynamics tests, tire performance tests, train speed measurements, to cite a few. For these reasons, recently they are attracting the attention of researchers in metrology in order to better evaluate their accuracy.

An example of calibration method for optical-based speedometers is reported in F. Semmler and R. Semmler, "Calibration device for a contactless optical device for measuring speed and/or distance travelled," Patent DE4 344 295, February 1995.

The solution disclosed in this document simulates the speed by generating an image of a surface that moves at a defined speed over a display.

Unfortunately, to the best of the Applicant's knowledge, an analysis regarding how the measurement traceability can be granted is not carried out.

## SUMMARY

The present solution has the aim of solving, at least in part, the previously highlighted issues, providing a novel test-bed for in-laboratory calibration of linear or angular speed and displacement sensors.

According to the present solution, a test-bed system is therefore provided, as defined in the attached claims.

## BRIEF DESCRIPTION OF THE FIGURES

For a better understanding of the present invention, a preferred embodiment thereof is now described, purely by way of non-limiting example and with reference to the attached drawings, wherein:

- Figure 1 shows schematically a vehicle with speed and displacement sensors mounted thereon;
- Figures 2A and 2B are perspective front and back views of a test-bed system according to an embodiment of the present solution;
- Figure 2c is a perspective top view of the test-bed system;
- Figures 3A-3C are, respectively, a front view, a top view and a perspective views of a flexible transmission element of the test-bed system and of a corresponding driving arrangement;
- Figure 4 is a schematic diagram of an assembly of the flexible transmission element and a driving pulley;
- Figures 5A-5C are schematic views of different application scenarios for the test-bed system; and
- Figure 6 is a schematic block diagram of an electric circuit in the test-bed system.

## DESCRIPTION OF EMBODIMENTS

As will be described in detail below, one aspect of the present solution provides for a test-bed system allowing to emulate a moving surface, which may be operatively coupled to a sensor to be tested (representing the unit under calibration, UUC). To this aim, the test-bed system comprises a suitable flexible transmission element and a driving arrangement configured to drive the transmission element into a movement at different reference speeds, for verification or calibration of the sensor, when operatively coupled to the same flexible transmission element.

In particular, the sensor is a linear or angular speed or displacement sensor, for example a non-contact optical-based sensor.

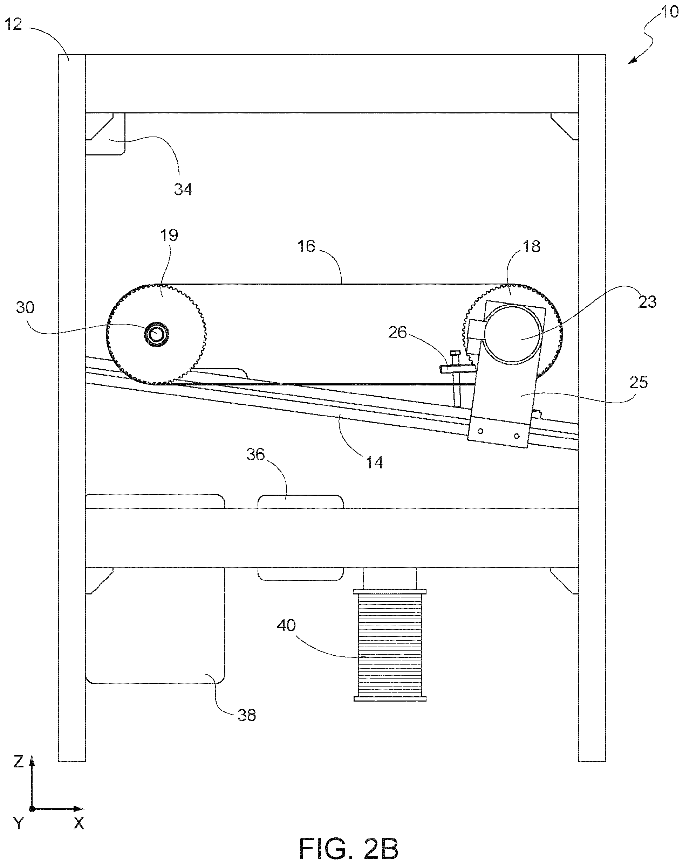

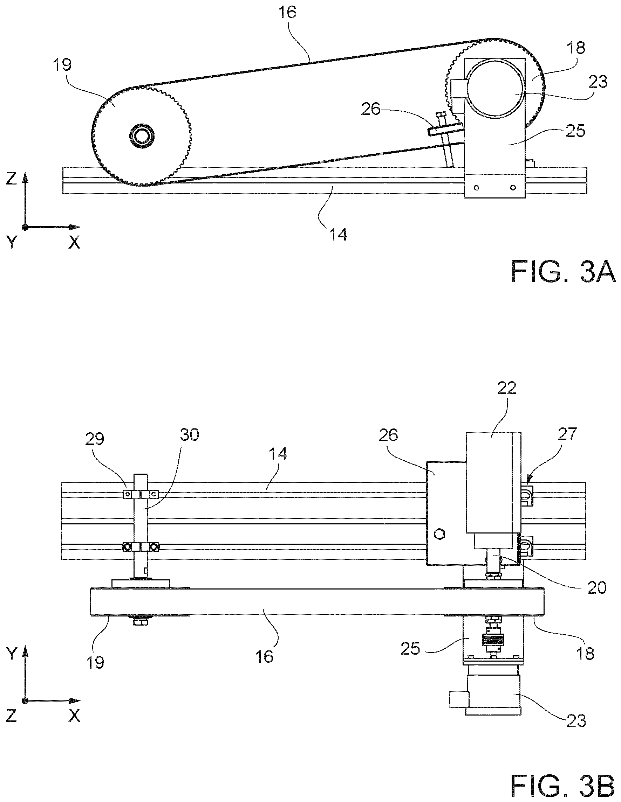

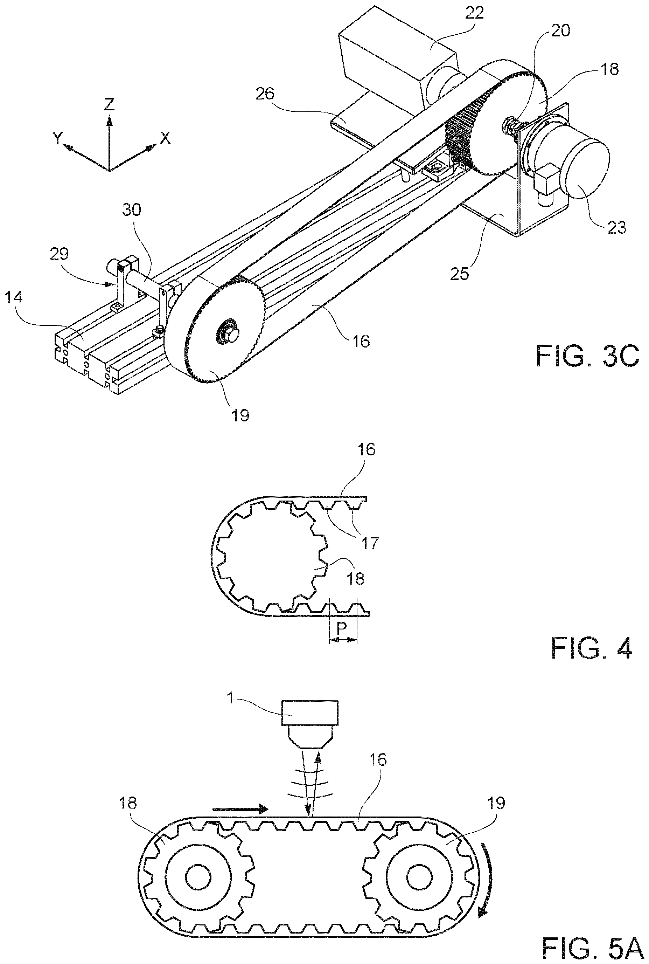

Figures 2A-2C show a test-bed system 10, according to a possible embodiment of the present solution, and Figures 3A-3C show a flexible transmission element and a driving arrangement of the test-bed system 10.

The test-bed system 10 comprises a frame-shaped housing 12, in the example having a parallelepiped box shape formed by vertical bars (extending along a vertical axis z of a Cartesian reference system) and horizontal bars (extending along a first and, respectively, second horizontal axes x, y of the same reference system).

The test-bed system 10 comprises, within the housing 12 and fixedly coupled to the same frame housing 12, a supporting base 14, in the example made of an aluminum profile having a high stiffness; the supporting base 14 has a rectangular shape (in plan view), with a longitudinal extension in the direction of the first horizontal axis x, inclined at a certain angle with respect to the same first horizontal axis x.

The test-bed system 10 further comprises a flexible transmission element 16, designed to rotate without sliding with respect to driving and driven pulleys, respectively denoted with references 18 and 19, which are mounted to the supporting base 14.

According to a possible embodiment, the flexible transmission element 16 is a conveyor belt, in particular a timing or synchronous belt, designed to guarantee synchronism between the driving and driven pulleys 18, 19 (which, in the same embodiment are timing pulleys).

However, it is underlined that other types of flexible power transmission elements, like flat or V belts or roller chains, are alternatively suitable for this application.

Figure 4 shows a schematic representation of one of the driving and driven pulleys 18, 19 (in the example, the driving pulley 18), having a radius r, and of the flexible transmission element 16, having a number z of teeth 17, separated by a given pitch p.

In more details (and again referring to Figures 2A-2C and 3A-3C), the driving pulley 18 is directly fixed, with a keyless bushing, on a driving shaft 20, at the output of an electric motor 22 (for example a three-phase air-cooled servo-motor, able to reach a maximum rotational speed, e.g., in the order of 16000-20000 rpm).

An incremental encoder 23, having a suitable number of pulses per revolution, is coupled with a flexible coupling, in particular with a disc spring coupling, to the same driving shaft 20, at an opposite side of the driving pulley 18 with respect to the electric motor 22.

The encoder 23 allows to directly determine the rotational speed of the electric motor 22 (for implementing a feedback control of the same rotational speed) and also to counteract the servomotor drive system.

In particular, the feedback-controlled electric motor 22 allows a constant angular velocity to be applied to the driving and driven pulleys 18, 19, so the flexible transmission element 16 can move with desired constant linear velocity (as will be discussed below, facing a non-contact optical-based sensor to be tested).

Both the electric motor 22 and the encoder 23 are coupled to the supporting base 14, at a first longitudinal end thereof.

In more detail, the encoder 23 is fixed to a supporting plate 25, which is directly secured to the supporting base 14.

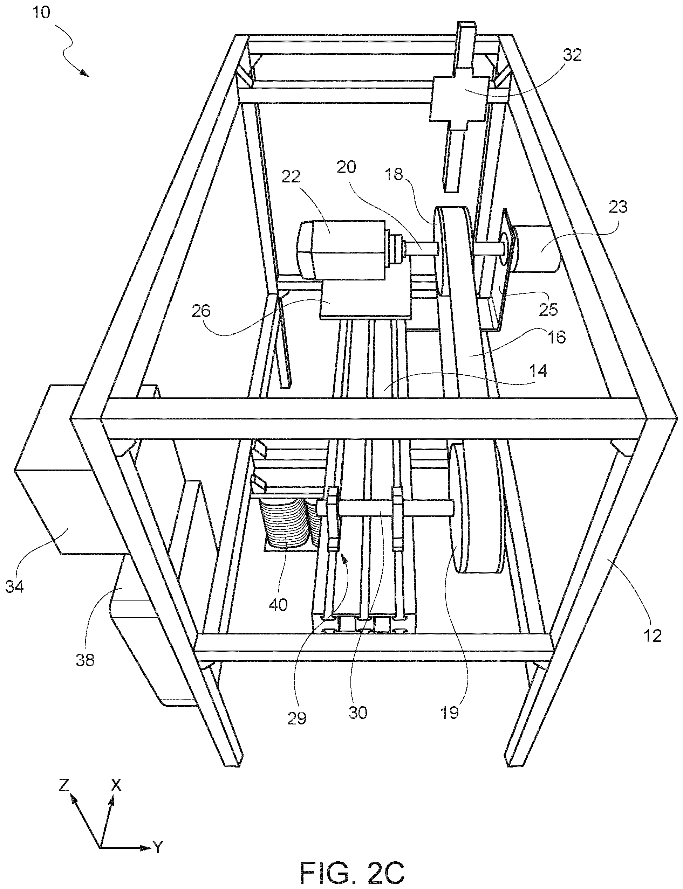

The electric motor 22 is mounted on a respective supporting plate 26, which is coupled to the supporting base 14 by means of a ball-bearing coupling 27. In this way, the electric motor 22 and the supporting plate 26 are free to rotate around a respective shaft 28 (visible in Figure 2C), to allow pre-tensioning of the flexible transmission element 16.

The driven pulley 19 is fitted, by means of a ball-bearing coupling 29 fixed to the supporting base 14, on a driven shaft 30, at a second longitudinal end of the same supporting base 14, opposite with respect to the first longitudinal end.

In a possible embodiment, the test-bed system 10 further comprises a sensor-support plate 32 (visible in Figure 2C), which is fixed to the housing 12, directly above the flexible transmission element 16 and facing a top surface of the same flexible transmission element 16, in the example in a region corresponding to the first longitudinal end of the supporting base 14 (and to the position of the electric motor 22 and the encoder 23).

During operation, this sensor-support plate 32 is configured to carry a sensor to be tested, in particular of the non-contact optical type, so that the same sensor faces the flexible transmission element 16, which may thereby simulate a moving surface (e.g. a moving road surface, in case of a vehicle application as shown in Figure 1).

Figure 5A schematically shows a first application scenario, where the sensor, again denoted with 1, is a radar-type sensor, which is configured to emit a radio-wave signal and receive the signal reflected back from the flexible transmission element 16.

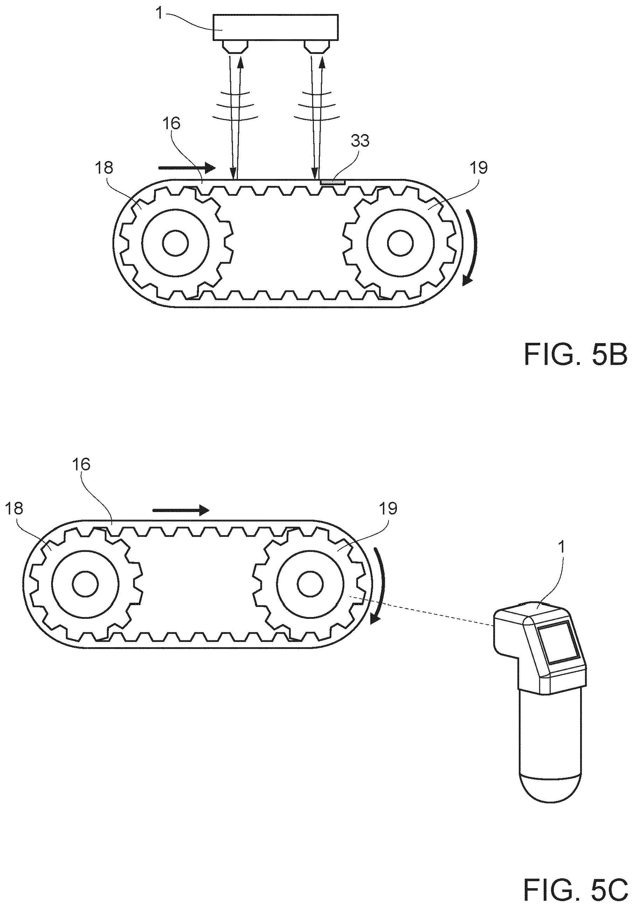

Figure 5B schematically shows a second application scenario, where the sensor 1 is of the barrier laser type. In this case, a suitable reference element 33, such as a mark, a fin, or a colored sign, is provided on the surface of the flexible transmission element 16 facing the same sensor 1.

Figure 5C schematically shows a third application scenario, where the sensor 1 is a radar sensor.

In all the above cases, the sensor 1 is of the non-contact optical-based type and may be configured to detect linear speed or displacement; as will also be discussed in the following, the test-bed system 10 is, however, adapted to test also angular speed or displacement sensors of a different type, such as encoder sensors.

The test-bed system 10 moreover comprises (again referring to Figures 2A-2C) an inverter 34, which is coupled to the housing 12 and is configured to set the rotational speed of the electric motor 22, in particular controlling the frequency of the power supplied to the same electric motor 22.

In order to do so, the inverter 34 is equipped with an analog input port which is configured to receive an adjusting signal, based on which the inverter 34 drives the electric motor 22, in particular setting the frequency and consequently the motor rotational speed (and therefore the speed of the flexible transmission element 16).

This adjusting voltage level (for example a DC voltage comprised between 0 and 10 V) is provided in the exemplary embodiment by a data acquisition board 36, that is mounted to the housing 12 and is moreover connected, e.g. via a USB connection, to a computing device 38 (e.g. a Personal Computer or similar), which may also be coupled to the same housing 12.

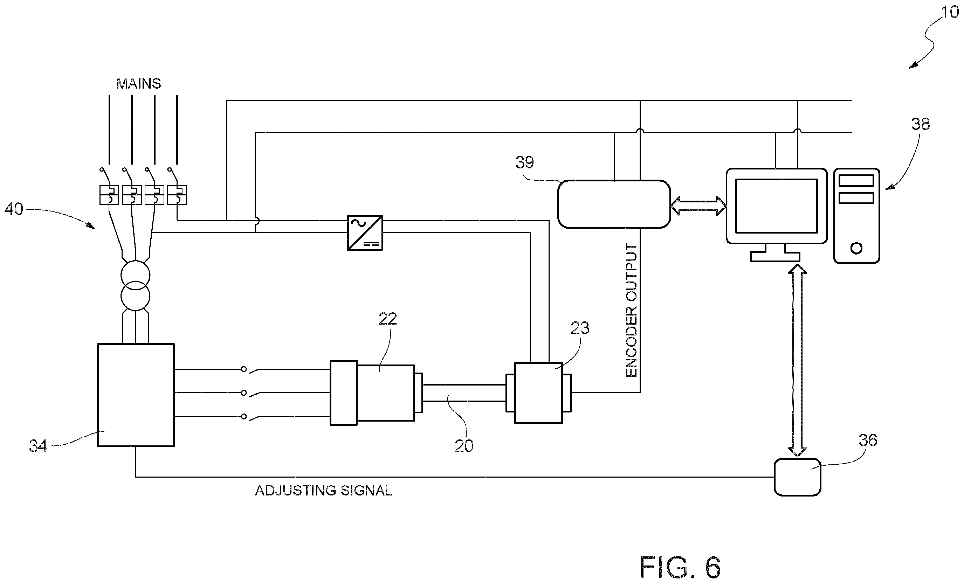

In the exemplary embodiment, the output of the encoder 23 is provided to the computing device 38 via a frequency counter 39 (see also Figure 6) and a suitable interface, e.g. a General Purpose Interface Bus (GPIB).

A suitable application software, running on the computing device 38, is configured to: generate the above adjusting signal for the electric motor 22, to set the desired speed of the flexible transmission element 16 (via a feedback control of the same electric motor 22) for testing of the non-contact optical-based sensor 1 under test; and moreover to collect the data from the same non-contact optical-based sensor 1 in order to verify and calibrate its operation.

The test-bed system 10 may moreover comprise a transformer 40 (for example a three-phase transformer), that is configured to adjust a supply voltage (e.g. a mains voltage of 220 V) to nominal values required for power supply of the inverter 34.

According to a possible embodiment, the transformer 40 is installed on the bottom of the housing 12 for increasing the system inertia and in the meantime damping the vibrations induced by the rotating parts on the same housing 12.

Figure 6 shows an electric schematic diagram of the test-bed system 10, in accordance with the above disclosure.

A detailed analysis of uncertainty contributions to the measurements performed via the test-bed system 10 (so called "uncertainty budget analysis") is now provided.

Uncertainty Budget Analysis For Angular Velocity

As discussed above, in order to measure an angular speed $\omega$, the proposed test-bed system 10 is equipped with a rotary encoder 23, connected to the driving shaft 20 that imposes the rotation of the driving pulley 18, and the output of the encoder 23 is connected to the computing device 38 via a frequency counter.

In detail, considering the proposed test-bed system 10, the angular speed w is directly proportional to the number of observed pulses Δn inside a constant-width time-window, being the gate time $T_g$ of the frequency counter, according to the following equation:

$$\omega = \frac{2\pi}{N} \cdot \frac{\Delta n}{T_g} \quad (1),$$

where N is a specification feature of the encoder 23, representing the number of pulses per revolution.

In this respect, reference may also be made to the following references:

R. Petrella and M. Tursini, "An embedded system for position and speed measurement adopting incremental encoders," IEEE Transactions on Industry Applications, vol. 44, no. 5, pp. 1436-1444, 2008; and

M. Faccio et al. "An embedded system for position and speed measurement adopting incremental encoders" in IEEE Industry Applications Conference, vol.2, 2004, 1192-1199, vol.2.

Considering that the measured frequency of the output signal of the encoder is calculated according to the following equation

$$f = \frac{\Delta n}{T_g} \quad (2),$$

substituting (2) in (1), the angular speed ω can be calculated as

$$\omega = \frac{2\pi}{N} \cdot f \quad (3).$$

According to BIPM, IEC and IFCC, ISO and IUPAC, IUPAP, "JCGM 100: 2008," Evaluation of measurement data-Guide to the expression of uncertainty in measurement (GUM 1995 with minor corrections), the measurement uncertainty of the angular speed w can be evaluated as:

$$u_\omega = \omega \sqrt{\dot{u}_N^2 + \dot{u}_f^2} \quad (4),$$

where $\dot{u}_N$ and $\dot{u}_f$ are the relative measurement uncertainties of N and f, respectively.

N can be evaluated by means of the following equation:

$$N = N + \Delta_{N_{Acc}} \quad (5),$$

where $\Delta_{Nacc}$ is connected to the encoder accuracy; this effect can be considered with a zero mean value and with uncertainty $u\Delta_{NAcc}$ that, considering a uniform distribution, can be written as:

$$u_{\Delta_{N_{Acc}}} = \frac{Acc_N}{\sqrt{3}} \quad (6),$$

where $Acc_N$ is the encoder accuracy (including also the contribution due to the resolution of the same encoder 23) as reported in the measuring instrument specifications.

Moreover, it is possible to evaluate that:

$$u_N = u_{\Delta_{N_{Acc}}} \quad (7).$$

Furthermore, considering all the influence quantities in the evaluation of f, the same frequency f can be written in this way:

$$f = f + \Delta_{f_{cal}} + \Delta_{f_{res}} + \Delta_{f_{Acc}} \quad (8),$$

where:

- $\Delta_{fcal}$ is the influence quantity due to the calibration of the frequency counter 39; it can be considered with a zero mean value and with a measurement uncertainty $u\Delta_{fcal}$;
- $\Delta_{fres}$ is the influence quantity due to the resolution of the frequency counter 39; it can be considered with a zero mean value and with a measurement uncertainty $u\Delta_{fres}$;
- $\Delta_{fAcc}$ is the influence quantity due to the accuracy of the frequency counter 39; it can be considered with a zero mean value and with a measurement uncertainty $u\Delta_{fAcc}$.

As a consequence, taking into account all the above-mentioned influence quantities, the measurement uncertainty of the frequency can be calculated as

$$u_f = \sqrt{u_{\Delta_{f_{cal}}}^2 + u_{\Delta_{f_{res}}}^2 + u_{\Delta_{f_{Acc}}}^2} \quad (9).$$

Considering the previous equation, $u\Delta_{fcal}$ can be retrieved from the frequency counter calibration certificate, instead, the remaining two quantities can be evaluated, considering a uniform distribution, as follows:

$$u_{\Delta_{f_{res}}} = \frac{res_f}{\sqrt{12}} \quad (10)$$

$$u_{\Delta_{f\,Acc}} = \frac{Acc_f}{\sqrt{3}} \quad (11),$$

where $res_f$ and $Acc_f$ are the frequency counter accuracy and resolution, respectively.

The calculation of the uncertainty contribution related to equations (10) and (11) can be calculated according to the specifications of the frequency counter manufacturer.

Uncertainty budget analysis for linear velocity

In the above discussed test-bed system 10, the speed v of the flexible transmission element 16, which is considered as a reference, can be evaluated as:

$$v = \omega \cdot r \quad (12),$$

where w and r are the angular speed and, respectively, the pitch circle radius of the driving pulley 18.

Starting from (12) and applying the considerations discussed in the above cited reference (BIPM, IEC and IFCC, ISO and IUPAC, IUPAP, "JCGM 100: 2008," Evaluation of measurement data-Guide to the expression of uncertainty in measurement (GUM 1995 with minor corrections), the measurement uncertainty of the reference speed ($u_v$) can be evaluated by means of the following equation:

$$u_v = v \sqrt{\dot{u}_\omega^2 + \dot{u}_r^2} \quad (13),$$

where $\dot{u}_\omega$ and $\dot{u}_r$ are the relative measurement uncertainties of the angular speed and of the pitch circle radius, respectively and they can be evaluated as follows:

$$\dot{u}_\omega = \frac{u_\omega}{\omega} \quad (14)$$

$$\dot{u}_r = \frac{u_r}{r} \quad (15).$$

As a consequence, for the evaluation of (13) the knowledge of $\omega$, r and their measurement uncertainties is required.

The uncertainty of the angular velocity can be evaluated according to (4), as discussed above.

The evaluation of the pitch circle radius can be expressed by means of the following equation:

$$r = r + \Delta_{r_{cal}} + \Delta_{r_{dev}} \quad (19),$$

where:

- $\Delta_{rdev}$ is connected to the pitch accuracy; this effect can be considered with a zero mean value and with uncertainty $u_{\Delta rdev}$ that, considering a uniform distribution, can be written as:

$$u_{\Delta_{r_{dev}}} = \frac{Acc_{\Delta r}}{\sqrt{3}} \quad (20);$$

- $\Delta_{rcal}$ is connected to the calibration; the uncertainty value ($u_{\Delta rcal}$) is equal to the uncertainty that can be taken from the calibration certificate of the pulley.

As a consequence, taking into account all the above-mentioned influence quantities, the measurement uncertainty of the pitch can be calculated as:

$$u_r = \sqrt{u_{\Delta_{r_{cal}}}^2 + u_{\Delta_{r_{dev}}}^2} \quad (21).$$

Uncertainty Budget Analysis For Angular Displacement

The angular displacement is the evaluation of how much the pulley is rotated around its axis in the measurement time $T_g$; this quantity is denoted as θ.

Considering the proposed test-bed system 10, θ is directly proportional to the number of the observed pulses Δn inside a constant-width time-window, that is the gate time of the counter $T_g$:

$$\theta = \frac{2\pi}{N} \cdot \Delta n \quad (22)$$

The measurement uncertainty of the angular speed can be evaluated as:

$$u_\theta = \theta \cdot \sqrt{\dot{u}_N^2 + \dot{u}_{\Delta n}^2} \quad (23)$$

Where $\dot{u}_N$ and $\dot{u}_{\Delta n}$ are the relative measurement uncertainties of N and Δn, respectively.

$u_N$ can be evaluated according to (7).

Δn can be expressed by means of the following equation

$$\Delta n = \Delta n + \Delta_{\Delta n_{res}} + \Delta_{\Delta n_{acc}} \quad (24),$$

where:

- $\Delta n_{res}$ is the influence quantity due to the resolution of the counter; it can be considered with a zero mean value and with a measurement uncertainty $\Delta_{\Delta n_{res}}$;
- $\Delta n_{acc}$ is the influence quantity due to the accuracy of the counter; it can be considered with a zero mean value and with a measurement uncertainty $\Delta_{\Delta n_{acc}}$.

As a consequence, taking into account all the above-mentioned influence quantities, the measurement uncertainty of ∆n can be calculated as

$$u_{\Delta n} = \sqrt{u_{\Delta \Delta n_{res}}^2 + u_{\Delta \Delta n_{Acc}}^2} \quad (25),$$

where $u_{\Delta \Delta n_{res}}$ and $u_{\Delta \Delta n_{Acc}}$ can be evaluated, considering a uniform distribution, as follows:

$$u_{\Delta \Delta n_{res}} = \frac{res_{\Delta n}}{\sqrt{12}} \quad (26)$$

$$u_{\Delta \Delta n_{Acc}} = \frac{Acc_{\Delta n}}{\sqrt{3}} \quad (27),$$

where $res_{\Delta n}$ and $Acc_{\Delta n}$ are the counter accuracy and resolution, respectively.

Uncertainty Budget Analysis For Linear Displacement

The displacement (d) of the flexible transmission element 16 can be evaluated as:

$$d = \theta \cdot r \quad (28)$$

where θ and r are the angular displacement and the pitch circle radius of the pulley, respectively.
Starting from (28), the measurement uncertainty of the linear displacement ($u_d$) can be evaluated by means of the following equation

$$u_d = d \sqrt{\dot{u}_\theta^2 + \dot{u}_r^2} \quad (29),$$

where $\dot{u}_\theta$ is the relative measurement uncertainty of the angular displacement and it can be evaluated as follows:

$$\dot{u}_\theta = \frac{u_\theta}{\theta} \quad (30).$$

$u_\theta$ and $\dot{u}_r^2$ can be evaluated according to (23) and, respectively, (15).
The advantages of the proposed solution are clear from the preceding description.
In any case, it is highlighted that the disclosed solution provides a reliable and easy to implement system for in-laboratory verification and calibration of non-contact optical-based sensors, in particular speedometer sensors.
Preliminary analyses have demonstrated that the proposed solution is able to emulate a wide range of speeds with a linear voltage-speed characteristic curve.
Repeatability analyses have demonstrated that test-bed system 10 shows an experimental relative standard deviation that can be considered suitable for characterization of a wide range of non-contact optical-based sensors.
Finally, it is clear that modifications and variations may be made to what is described and illustrated herein without thereby departing from the scope of the present invention, as defined in the attached claims.
In particular, it is underlined that the discussed solution can find advantageous application in the verification and calibration of different types of sensors, not being limited to optical-based speed and displacement meters, but also to other sensors, such as optoelectronic barrier meters, radar meters, and in addition angular displacement and speed meters, such as encoders.

**Claims**

1. A test-bed system (10) for testing of a linear or angular displacement or speed sensor (1), comprising:

    a housing (12);
    a flexible transmission element (16) arranged within the housing (12);
    a driving arrangement (18,19,22) arranged within the housing (12), coupled to the flexible transmission element (16) and configured to drive the flexible element (16) into a movement designed for verification or calibration of a linear or angular displacement or speed sensor (1) operatively coupled to the flexible transmission element (16).

2. The system according to claim 1, wherein the driving arrangement (18,19,22) is configured to drive the flexible element (16) into a movement at different reference speeds designed for verification or calibration of the sensor (1).

3. The system according to any of the preceding claims, comprising, within the housing (12) and fixedly coupled to the housing (12), a supporting base (14) having a longitudinal extension; wherein the driving arrangement (18,19,22) comprises: a driving pulley (18) and a driven pulley (19), which are mounted to the supporting base (14) at a first longitudinal end of the supporting base (14) and, respectively, at a second longitudinal end of the supporting base (14) opposite to the first longitudinal end; wherein the flexible transmission element (16) is mounted to the driving and driven pulleys (18, 19) and the driving arrangement (18,19, 22) is configured to rotate the flexible element (16) with respect to the driving and driven pulleys (18, 19).

4. The system according to claim 3, wherein the flexible transmission element (16) is a conveyor belt.

**5.** The system according to claim 4, wherein the flexible transmission element (16) is a timing belt.

**6.** The system according to any of claims 3-5, wherein the driven pulley (19) is fitted, by means of a ball bearing coupling (29) fixed to the supporting base (14), on a driven shaft (30), at the second longitudinal end of the supporting base (14).

**7.** The system according to any of claims 3-6, wherein the driving arrangement (18,19,22) further comprises an electric motor (22) having an output driving shaft (20), the driving pulley (18) being directly fixed on the driving shaft (20) .

**8.** The system according to claim 7, wherein the electric motor (22) is mounted on a plate (26), which is coupled to the supporting base (14) by means of a ball bearing coupling (27), the electric motor (22) and the plate (26) being free to rotate around a shaft (28) to allow pre-tensioning of the flexible transmission element (16).

**9.** The system according to claim 7 or 8, further comprising an encoder (23) coupled with a flexible coupling to the driving shaft (20), at an opposite side of the driving pulley (18) with respect to the electric motor (22).

**10.** The system according to claim 9, wherein the encoder (23) is configured to determine a rotational speed of the electric motor (22) for a feedback control of the electric motor (22) designed to provide a constant angular velocity to the driving and driven pulleys (18, 19), so as to move the flexible transmission element (16) with a constant linear velocity.

**11.** The system according to claim 10, further comprising an inverter (34), which is coupled to the housing (12) and is configured to provide a supply voltage to the electric motor (22) for setting the motor rotational speed and, as a consequence, the speed of the flexible transmission element (16) .

**12.** The system according to claim 11, further comprising a computing device (38), coupled to the encoder (23) to receive the determined rotational speed of the electric motor (22) and configured to provide an adjusting signal to the inverter (34) based on a desired reference speed of the flexible transmission element (16) and the determined rotational speed of the electric motor (22); wherein the inverter (34) is configured to generate the supply voltage to the electric motor (22) as a function of the adjusting signal.

**13.** The system according to claim 11 or 12, further comprising a transformer (40) configured to provide a power supply to the inverter (34); wherein the transformer (40) is mounted on a bottom of the housing (12) for increasing inertia and damping rotation-induced vibrations on the same housing (12).

**14.** The system according to any of the preceding claims, further comprising a sensor support (32), fixed to the housing (12) and configured to carry the sensor (1) to be tested, so that the sensor (1) faces the flexible transmission element (16).

**15.** The system according to any of the preceding claims, wherein the sensor (1) is designed for vehicle applications, to be mounted on a vehicle (2) so as to face a road surface; wherein the flexible transmission element (16) is configured to simulate movement of the road surface at different reference speeds

**16.** The system according to any of the preceding claims, wherein the sensor (1) is a non-contact optical sensor.

FIG. 1

FIG. 2A

FIG. 2B

FIG. 2C

FIG. 3A

FIG. 3B

FIG. 3C

FIG. 4

FIG. 5A

FIG. 5B

FIG. 5C

FIG. 6

EP 4 474 832 A1

Europäisches
Patentamt

European
Patent Office

Office européen
des brevets

# EUROPEAN SEARCH REPORT

Application Number

EP 24 17 6582

## DOCUMENTS CONSIDERED TO BE RELEVANT

| Category | Citation of document with indication, where appropriate, of relevant passages | Relevant to claim |
|---|---|---|
| X | KR 101 466 176 B1 (HYUNDAI STEEL CO [KR]) 27 November 2014 (2014-11-27) * paragraphs [0020], [0033] - [0041], [0051], [0052] * | 1,3-9, 14,16 |
| | ----- | |
| X | US 2009/018791 A1 (DEJONG JOANNES N M [US] ET AL) 15 January 2009 (2009-01-15) * paragraphs [0025], [0026], [0029], [0030] - [0035]; figures 1-11 * | 1,2, 10-13 |
| | ----- | |
| X | US 4 353 068 A (FERNANDEZ EMILIO A) 5 October 1982 (1982-10-05) * columns 1, 4-6; figures 1-3 * | 1,2,15 |
| | ----- | |
| X | KR 101 026 115 B1 (KOREA MACH & MATERIALS INST [KR]) 5 April 2011 (2011-04-05) * figures 1-3 and corresponding description passages; figures 1-3 * | 1-6,16 |
| | ----- | |

**CLASSIFICATION OF THE APPLICATION (IPC)**

INV.
G01P21/02
G01D18/00

ADD.
G01P3/36

**TECHNICAL FIELDS SEARCHED (IPC)**

G01P
G01D

The present search report has been drawn up for all claims

| Place of search | Date of completion of the search | Examiner |
|---|---|---|
| Munich | 11 September 2024 | Schwarz, Cornelia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                           

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 6582

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2024

| Patent document cited in search report | | Publication date | Patent family member(s) | Publication date |
|---|---|---|---|---|
| KR 101466176 | B1 | 27-11-2014 | NONE | |
| US 2009018791 | A1 | 15-01-2009 | NONE | |
| US 4353068 | A | 05-10-1982 | NONE | |
| KR 101026115 | B1 | 05-04-2011 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23174144

- DE 4344295, F. Semmler

**Non-patent literature cited in the description**

- **A. MARTUCCI ; G. CERASUOLO ; O. PETRELLA ; M. LARACCA.** On the Calibration of GNSS-Based Vehicle Speed Meters. *Sensors,* 2020, vol. 20 (3
- **L. DU ; Q. SUN ; J. BAI ; J. WANG.** A verification method for traffic radar-based speed meter with target position determination in road vehicle speeding enforcement. *IEEE Transactions on Vehicular Technology,* 2021, vol. 70 (12), 12 374-12 388

- **J. JENDZURSKI ; N. PAULTER.** Calibration of Speed Enforcement Downthe-Road Radars. *Journal of Research of the National Institute of Standards and Technology,* May 2009, vol. 114 (3), 137-148
- **R. PETRELLA ; M. TURSINI.** An embedded system for position and speed measurement adopting incremental encoders. *IEEE Transactions on Industry Applications,* 2008, vol. 44 (5), 1436-1444
- **M. FACCIO et al.** An embedded system for position and speed measurement adopting incremental encoders. *IEEE Industry Applications Conference,* 2004, vol. 2, 1192-1199